# FASCICULE DE BREVET EUROPEEN

(11) **EP 1 611 357 B1**
(45) Date de publication et mention de la délivrance du brevet: **11.09.2013**
(21) Numéro de dépôt: 04725031.1
(22) Date de dépôt: 01.04.2004
(51) Int. Cl.: F04D 25/08, H02K 9/06, B60H 1/00, H02K 7/14

(54) **DISPOSITIF DE VENTILATION**
LÜFTUNGSEINRICHTUNG
VENTILATING DEVICE

(30) Priorité: 02.04.2003 FR 0304119
(43) Date de publication de la demande: 04.01.2006
(73) Titulaire: VALEO SYSTEMES D'ESSUYAGE, 78321 La Verrière (FR)
(72) Inventeur: MOREAU, Stéphane, F-75004 Paris (FR); HENNER, Manuel, F-78610 Auffargis (FR); DEMORY, Bruno, 95490 Vaureal (FR)
(86) Numéro de dépôt international: PCT/EP2004/003436
(87) Numéro de publication internationale: WO 2004/088142

(56) Documents cités:
- EP-A- 0 452 518
- EP-A- 0 569 738
- EP-A- 1 050 682
- US-A- 5 236 306
- US-A1- 2002 187 059

## Description

La présente invention concerne un dispositif de ventilation destiné à transformer en un déplacement d'air, l'énergie cinétique qui est fournie à une hélice par un moteur électrique.

L'invention trouve une application particulièrement avantageuse, mais non exclusive, dans le domaine automobile notamment pour assurer la fonction de refroidissement moteur.

De manière classique, un dispositif de ventilation est essentiellement composé d'un support de fixation destiné par ailleurs à maintenir un moteur électrique chargé d'entraîner en rotation une hélice. Concrètement, l'hélice est constituée d'une pluralité de pales régulièrement réparties autour d'un bol qui est solidaire de l'arbre de transmission du moteur électrique, ledit moteur étant lui-même solidaire du support. De manière tout aussi habituelle, le support est composé d'une partie centrale qui est maintenue par des bras supports sensiblement au milieu d'une partie périphérique, formant cadre. La partie centrale a pour fonction de servir de support pour la fixation du moteur électrique.

Dans les dispositifs de ventilation de l'état de la technique, connus par exemple par les documents EP1050682 A, US 2002/187059 A et US 5 236 306 A, la partie centrale du support présente généralement une forme annulaire dont le trou central est apte à recevoir le moteur électrique en position axiale. La fixation proprement dite du moteur électrique par rapport au support s'effectue au moyen de pattes régulièrement réparties, par exemple trois pattes disposées à 120°. Chaque patte de fixation est solidaire du moteur électrique et vient se fixer sur la partie centrale du support.

Dans la pratique, ce mode d'assemblage ne se conçoit qu'en utilisant un jeu significatif entre le bord interne de l'anneau central et le moteur électrique. En effet, d'un point de vue industrielle, le montage d'un dispositif de ventilation doit être aussi rapide que possible. Il est par conséquent hors de question que les opérateurs aient à forcer pour mettre en place le moteur à l'intérieur de l'anneau central. C'est pourquoi, à l'heure actuelle, les supports sont conformés de manière à ce qu'il existe toujours un jeux relativement important entre le bord interne de l'anneau central et le moteur électrique, de l'ordre de 3 à 10 mm. Cette caractéristique permet par ailleurs aux constructeurs de pouvoir adapter différents moteurs électriques sur un même support, en fonction de l'application envisagée.

Une autre particularité, des dispositifs de ventilation de l'état de la technique, réside dans le fait que le moteur électrique est généralement de type ouvert. Cela signifie qu'il y a de l'air qui circule au travers des différents pièces constituant le moteur, et notamment entre l'induit et l'inducteur. Bien entendu, les multiples passages présents à l'intérieur du moteur débouchent sur l'extérieur, directement ou via des lumières traversantes lorsque les extrémités des passages en question aboutissent au niveau d'un carter par exemple.

Or, dans le domaine des moteurs électriques ouverts, il faut savoir que le meilleur rendement est obtenu à basses températures, les pertes magnétiques et Joule étant bien supérieures au fur et à mesure que la température s'élève. Une température de fonctionnement basse permet également d'améliorer la longévité du moteur de manière significative.

Pour faire baisser la température de fonctionnement d'un moteur électrique ouvert, il est connu d'utiliser une hélice dotée d'un bol nervuré. L'ensemble des nervures internes agit comme une pompe centrifuge qui, d'une part, génère avantageusement un écoulement d'arrière en avant à l'intérieur du moteur électrique, et d'autre part, évacue ledit écoulement hors du bol.

Dans la pratique, ce type de dispositif de ventilation présente toutefois l'inconvénient de ne pas assurer un niveau de refroidissement satisfaisant au moteur électrique, ce qui est préjudiciable en terme de rendement mais également de fiabilité. En effet, la rotation des nervures ménagées à l'intérieur du bol engendre bien un écoulement d'air à travers le moteur électrique, mais son débit est insuffisant pour refroidir ledit moteur de manière optimale. La raison à cela vient du fait que l'aspiration, qui est créée par la mise en rotation des nervures internes, ne génère pas un écoulement uniquement dans le moteur électrique. Elle engendre également un écoulement à travers le jeu relativement important qui existe entre la partie centrale du support et le moteur électrique. Il y a donc une double aspiration, et de fait, le débit de l'écoulement d'air à l'intérieur du moteur se voit considérablement diminué.

Aussi le problème technique à résoudre, par l'objet de la présente invention, est de proposer un dispositif de ventilation comportant une hélice apte à être entraînée en rotation par un moteur électrique ouvert qui est solidaire d'un support destiné à la fixation dudit dispositif de ventilation, l'hélice étant composée d'une pluralité de pales qui sont régulièrement réparties autour d'un bol à l'intérieur duquel sont ménagées des nervures internes aptes à ventiler ledit moteur électrique ouvert, dispositif de ventilation qui permettrait d'éviter les problèmes de l'état de la technique en offrant au moteur électrique un refroidissement sensiblement amélioré.

La solution au problème technique posé consiste, selon la présente invention, en ce que le support comporte une partie centrale qui est liée de manière étanche à au moins une portion périphérique du moteur électrique ouvert. Cela signifie en d'autres termes que la partie centrale du support est en mesure de coopérer par contact jointif continu avec au moins une portion périphérique du moteur électrique ouvert.

L'invention telle qu'ainsi définie présente l'avantage de ne pas comporter de jeu significatif entre la partie centrale du support et le moteur électrique. Par rapport à ses homologues de l'état de la technique, la partie centrale a été étendue jusqu'au moteur électrique de manière à limiter au maximum les entrées d'air à ce niveau là. L'action des nervures internes en rotation se concentre désormais uniquement sur le moteur électrique, de sorte que le débit d'air qui le traverse se voit par conséquent considérablement augmenté, au bénéfice du refroidissement moteur.

La présente invention concerne également les caractéristiques qui ressortiront au cours de la description qui va suivre, et qui devront être considérées isolément ou selon toutes leurs combinaisons techniques possibles.

Cette description donnée à titre d'exemple non limitatif, fera mieux comprendre comment l'invention peut être réalisée, en référence aux dessins annexés sur lesquels:
La figure 1 illustre schématiquement les écoulements d'air générés lors de l'utilisation d'un dispositif de ventilation.
La figure 2 est une vue arrière partielle du dispositif de ventilation de la figure 1.
La figure 3 représente schématiquement, en coupe axiale, un dispositif de ventilation de l'art antérieur.
La figure 4 constitue une vue similaire à la figure 3, qui illustre pour comparaison un dispositif de ventilation conforme à l'invention.
La figure 5 montre en coupe axiale, et de manière partielle, un dispositif de ventilation selon un premier mode de réalisation de l'invention.
La figure 6 est une vue similaire à la figure 5, qui illustre un dispositif de ventilation selon un second mode de réalisation de l'invention.
La figure 7 constitue une vue similaire aux figures 5 et 6, qui représente un dispositif de ventilation selon un troisième mode de réalisation de l'invention.
La figure 8 est une vue similaire aux figures 5 à 7, qui fait apparaître un dispositif de ventilation selon un quatrième mode de réalisation de l'invention.

Pour des raisons de clarté, les mêmes éléments ont été désignés par des références identiques. De même, seuls les éléments essentiels pour la compréhension de l'invention ont été représentés, et ceci sans respect de l'échelle et de manière schématique.

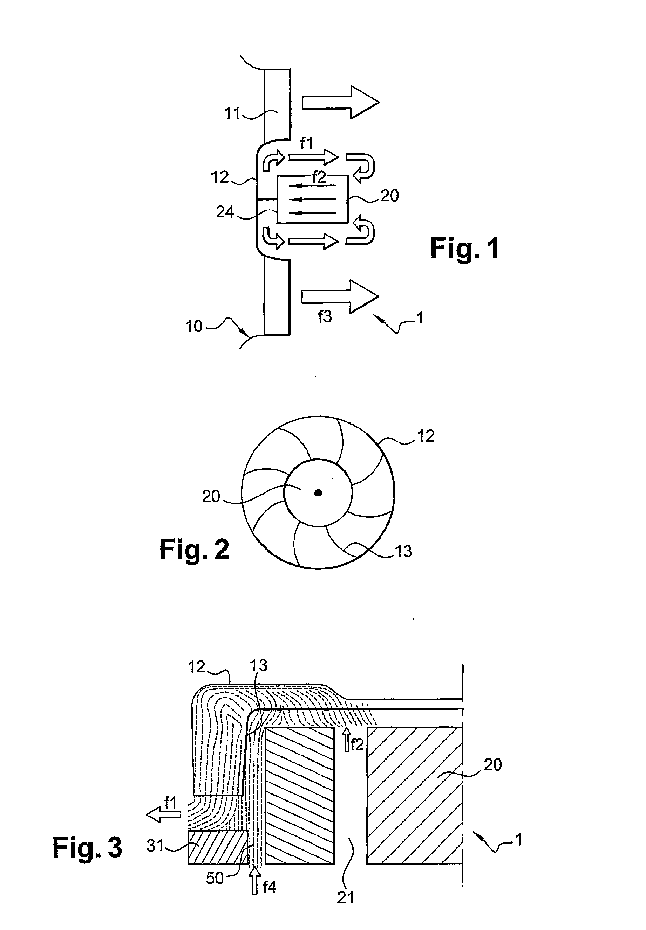

Les figures 1 et 2 permettent de mieux visualiser les écoulements d'air générés lors de la rotation d'une hélice 10 dont le bol 12 est pourvu de nervures internes 13, mais également de mieux comprendre comment s'effectue le refroidissement d'un moteur électrique ouvert 20 lorsque celui-ci est couplé avec ladite hélice 10.

Sur ces représentations schématiques, on distingue clairement le positionnement relatif du moteur électrique 20 par rapport à l'hélice 10, et notamment son centrage axial par rapport au bol nervuré 12. Lorsque l'hélice 10 est entraîné en rotation par le moteur électrique 20, les nervures internes 13 vont brasser l'air présent à l'intérieur du bol 12. Cet air va par conséquent être refoulé vers l'extérieur (flèches f1) sous l'effet de la force aérodynamique induite par les nervures internes 13 qui centrifuge l'air. Concomitamment, cette même force aérodynamique va aspirer l'air qui se trouve à l'intérieur du moteur électrique 20, créant ainsi de multiples écoulements continus (flèches f2) à travers les différents constituants dudit moteur électrique 20. Une fois arrivé au niveau de la partie avant 24 du moteur 20, c'est-à-dire au niveau de l'intérieur du bol 12, ces écoulements d'air vont être à leur tour centrifugés puis évacués vers l'extérieur. Simultanément les pales 11 de l'hélice 10 jouent pleinement leur rôle en refoulant de grande quantité d'air vers l'arrière (flèches f3).

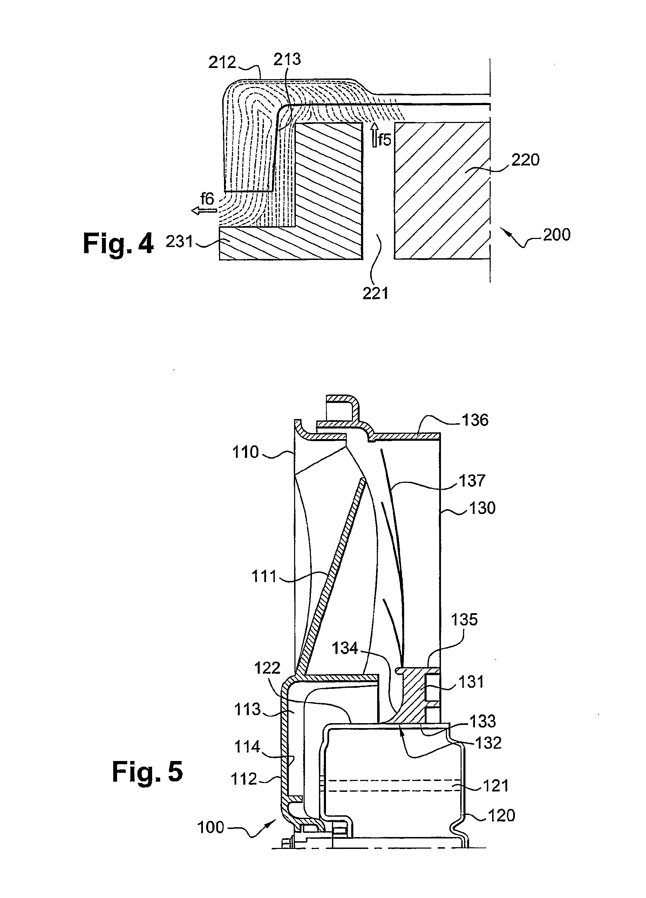

Les figures 3 et 4 illustrent respectivement, pour comparaison, un dispositif de ventilation 1 de l'art antérieur et un dispositif de ventilation 200 conforme à l'invention. Dans les deux cas, le moteur électrique 20, 220 est de type ouvert, un passage 21, 221 étant représenté schématiquement afin de symboliser l'écoulement de l'air à l'intérieur dudit moteur (flèches f2, f5). De plus, chaque moteur électrique 20, 220 est supporté par une partie centrale 31, 231.

Conformément à la figure 3, le jeu existant entre la partie centrale 31 et le moteur électrique 20 constitue un passage annexe 50 dans lequel se diffuse un écoulement d'air annexe (flèche f4). On voit bien que la force centrifuge, engendrée par la mise en rotation des nervures internes 13, n'aspire pas uniquement au niveau du moteur 20, mais exerce également son action à travers le passage annexe 50. Cette double aspiration (flèches f2 et f4) réduit par conséquent le débit de l'écoulement de l'air à l'intérieur du moteur (flèche f2), le débit de sortie f1 correspondant au cumul du débit à travers le moteur (flèche f2) et du débit à travers le passage annexe (flèche f4). Il a même été démontré que l'écoulement à travers le jeu pouvait être prépondérant par rapport à celui provenant du moteur 20.

Ainsi qu'on peut le voir sur la figure 4, le montage jointif entre la partie centrale 231 et le moteur électrique 220 permet avantageusement de supprimer l'écoulement d'air annexe. L'action de la force aérodynamique ne s'exerce plus désormais que sur le seul moteur électrique 220. Le débit de l'écoulement correspondant (flèche f5) se voit par conséquent augmenté dans des proportions importantes et correspond dorénavant au débit de sortie (flèche f6). Dans la pratique, il a été mesuré qu'une augmentation de plus de 50% était parfaitement envisageable.

La figure 5 illustre un dispositif de ventilation 100 comportant une hélice 110 susceptible d'être entraînée en rotation par un moteur électrique ouvert 120 qui est lui-même solidaire d'un support 130 destiné à la fixation dudit dispositif de ventilation 100. L'hélice 110 est composée quant à elle d'une pluralité de pales 111 qui sont régulièrement réparties autour d'un bol 112 à l'intérieur duquel sont ménagées des nervures internes 113 capables notamment de ventiler le moteur électrique ouvert 120 dont un passage 121 à été représenté schématiquement.

Conformément à l'objet de la présente invention, le support 130 comporte une partie centrale 131 qui est liée de manière sensiblement étanche à une portion périphérique du moteur électrique ouvert 120.

Dans ce premier mode de réalisation, la partie centrale 131 du support 130 comporte un trou traversant 132 qui est destiné à recevoir le moteur électrique ouvert 120 et dont la section est sensiblement complémentaire de celle dudit moteur électrique ouvert 120. Le fait que les sections soient sensiblement complémentaires signifie que les surfaces de contact correspondantes, respectivement de la partie centrale 131 et du moteur électrique 120, ne coopèrent pas obligatoirement par contact jointif de manière totalement continue. En d'autre termes, il peut exister un éventuel jeu et/ou un ou plusieurs interstices entre la partie centrale 131 et le moteur électrique 120. Cependant, les dimensions de ces espaces libres sont tellement minimes par rapport aux surfaces mises en contact, que leur présence n'a qu'un impact négligeable par rapport à un mode de réalisation idéal dans lequel le contact serait parfaitement continu.

Cependant, et de manière particulièrement avantageuse, le trou traversant 132 est ici délimité par un bord interne 133 qui coopère par contact jointif continu avec une portion de la surface périphérique du moteur électrique ouvert 120. Cela signifie que le trou traversant 132 épouse au plus près le pourtour du moteur électrique 120. Il n'existe ni jeu ni interstice entre le bord interne 133 et la surface périphérique du moteur électrique 120.

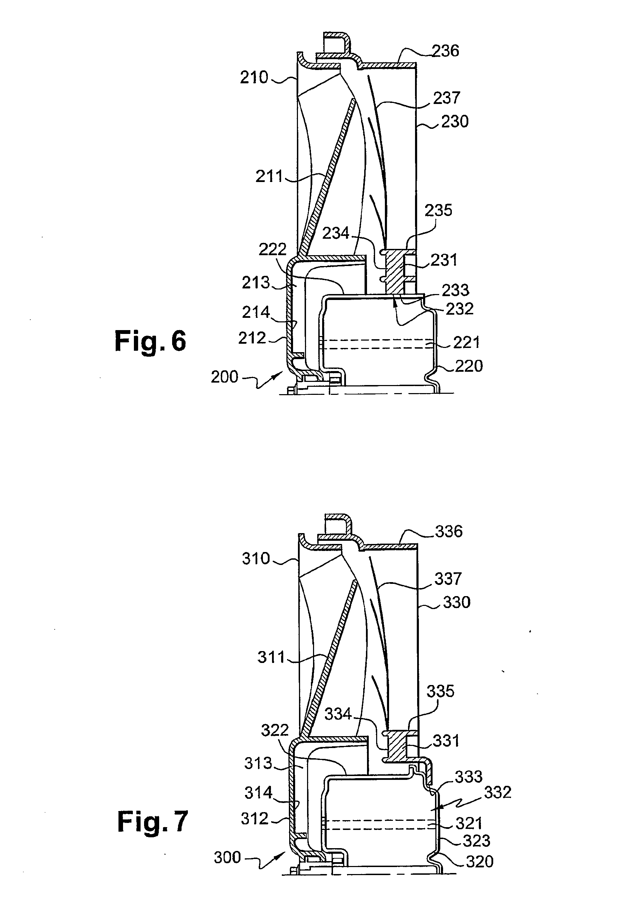

Les second et troisième modes de réalisation, illustrés respectivement aux figures 6 et 7, disposent également de ces particularités. Cependant, les premier et second modes de réalisation des figures 5 et 6 se distinguent par le fait que le bord interne 133, 233, qui délimite le trou traversant 132, 232, coopère par contact jointif continu avec la paroi latérale 122, 222 du moteur électrique ouvert 120. Le troisième mode de réalisation de la figure 7 se singularise quant à lui en raison du fait que le bord interne 333, qui délimite le trou traversant 332, coopère par contact jointif continu avec une portion périphérique de la partie arrière 323 du moteur électrique 320.

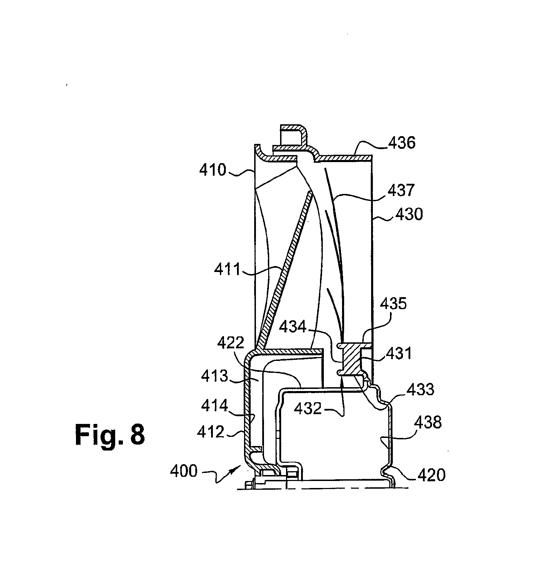

La figure 8 illustre un dispositif de ventilation 400 selon un quatrième mode de réalisation. Le support 430 est ici doté d'une partie centrale 431 dans laquelle est ménagé un trou borgne 432 qui est apte à recevoir au moins partiellement le moteur électrique ouvert 420. L'ensemble est agencé de manière à ce que le fond 438 du trou borgne 432 soit positionné sensiblement en regard de la partie arrière du moteur électrique ouvert 420. Le fond 438 s'étend ainsi de manière continue derrière le moteur électrique 420, de sorte qu'il forme naturellement une sorte d'écran apte à garantir l'étanchéité de la partie centrale 431, notamment vis-à-vis dudit moteur électrique 420, conformément à l'objet de la présente invention.

Selon une particularité de ce quatrième mode de réalisation, le fond 438 du trou borgne 432 est solidaire de la partie arrière du moteur électrique ouvert 420. Dans la pratique, cette solidarisation pourra être obtenue par tout moyen d'assemblage connu. A titre d'exemple, le flasque arrière du moteur électrique 420 pourra être surmoulé dans le fond 438 du trou borgne 432.

Dans l'exemple de réalisation de la figure 8, le flasque arrière du moteur électrique 420 et la partie centrale 431 peuvent même ne constituer qu'une seule et même pièce. Ainsi, selon une autre particularité de ce quatrième mode de réalisation, le fond 438 du trou borgne 432 est apte à constituer la partie arrière, formant flasque, du moteur électrique ouvert 420.

Dans l'hypothèse où le bord interne 133, 233, 333 coopère par contact jointif continu avec une portion quelconque de la surface périphérique du moteur électrique ouvert 120, 220, 320, il peut être avantageux que la partie centrale 131, 231, 331 du support 130, 230, 330 puisse maintenir ledit moteur électrique 120, 220, 320 par clipsage. Pour cela, les surfaces de contact correspondantes doivent être conformées de manière adéquate afin de pouvoir s'emboîter l'une dans l'autre par déformation mutuelle.

Conformément à une caractéristique avantageuse de l'invention, qui est utilisée dans les trois premiers modes de réalisation choisis pour illustrer l'invention, la partie centrale 131, 231, 331 du support 130, 230, 330 est apte à maintenir le moteur électrique ouvert 120, 220, 320 par montage serré. La section du trou traversant 132, 232, 332 est ici très légèrement inférieure à celle du moteur électrique ouvert 120, 220, 320, de sorte qu'après avoir été rentré en force, ledit moteur électrique 120, 220, 320 est en mesure d'être immobilisé par le serrage exercé par la partie centrale 131, 231, 331.

Que l'assemblage du moteur électrique 120, 220, 320 dans la partie centrale 131, 231, 331 soit réalisé par clipsage, par montage serré ou par tout autre moyen, il est toujours possible de compléter cette immobilisation par une fixation au moyen de pattes classiques. Un surmoulage serait même parfaitement envisageable, comme dans le cas du quatrième mode de réalisation précédemment décrit.

Selon une particularité du premier mode de réalisation visible sur la figure 5, la partie centrale 131 comporte une surface 134, dite active, qui est positionnée en regard du fond 114 du bol 112 et qui présente une forme concave apte à faciliter l'écoulement de l'air de l'intérieur vers l'extérieur du bol 112. La partie centrale 131 est ici véritablement profilée afin de réduire au maximum les perturbations aérodynamiques au niveau du support 130, et notamment les phénomènes de recirculation et/ou les tourbillons. L'évacuation de l'écoulement d'air en provenance de l'intérieur du bol 112 s'effectue ainsi de manière sensiblement optimisée.

Dans cet exemple de réalisation, la surface active 134 de la partie centrale 131 présente une section en forme de quart de cercle dont les deux extrémités s'étendent respectivement, d'une part, de manière sensiblement axiale au niveau du bord interne 133 de la partie centrale 131, et d'autre part, de manière sensiblement transversale au niveau du bord externe 135 de ladite partie centrale 131. La surface active 134 présente en quelque sorte une forme qui est sensiblement complémentaire d'une portion de cylindre de révolution dont le profil serait un quart-de-rond. Quoi qu'il en soit, le montage du moteur électrique 120 s'effectue ici avantageusement par l'arrière du support 130.

Selon une particularité du second mode de réalisation visible sur la figure 6, la partie centrale 231 comporte une surface 234, dite active, qui est positionnée en regard du fond 214 du bol 212 et qui présente une forme sensiblement plane s'étendant de manière sensiblement linéaire. Dans cet exemple de réalisation, la surface active 234 est par ailleurs parallèle au fond 214 du bol 212. Quoi qu'il en soit, le montage du moteur électrique 220 s'effectue ici indifféremment par l'arrière ou par l'avant du support 230.

Selon une particularité des troisième et quatrième modes de réalisation, visible sur la figure 7, la partie centrale 331, 431 comporte une surface 334, 434, dite active, qui est positionnée en regard du fond 314, 414 du bol 312, 412 et qui s'étend de manière discontinue. Dans cet exemple de réalisation, chaque portion de la surface active 334, 434 est par ailleurs parallèle au fond 314, 414 du bol 312, 414. Quoi qu'il en soit, le montage du moteur électrique 320, 420 s'effectue avantageusement ici par l'avant du support 330, 430.

Selon un mode de réalisation actuellement préféré de l'invention, la partie centrale 131, 231, 331, 431 présente une forme annulaire dont le bord externe 135, 235, 335, 435 s'étend sensiblement en regard de celui du bol 112, 212, 312, 412, et dont le bord interne 133, 233, 333, 433 délimite un trou 132, 232, 332, 432 de section circulaire. Cela sous-entend que le moteur électrique associé 120, 220, 320, 420 est cylindrique. Ce qui est généralement toujours le cas dans la pratique.

Selon une autre particularité de l'invention, le support 130, 230, 330, 430 comporte en outre une partie périphérique 136, 236, 336, 436, formant cadre, qui est reliée à la partie centrale 131, 231, 331, 431 par au moins un bras support 137, 237, 337, 437. Dans la pratique, la partie centrale 131, 231, 331, 431 est maintenue sensiblement au milieu de la partie périphérique 136, 236, 336, 436 par l'intermédiaire de plusieurs bras supports 137, 237, 337, 437 qui sont régulièrement répartis pour que la rigidité de l'ensemble soit uniforme. Le nombre de ces bras supports 137, 237, 337, 437 doit cependant rester aussi limité que possible afin de ne perturber qu'au minimum l'écoulement de l'air généré par les pales 111, 211, 311, 411 de l'hélice 110, 210, 310, 410.

Bien entendu l'invention s'applique à toute application utilisant au moins un dispositif de ventilation 100, 200, 300, 400 comportant une hélice 110, 210, 310, 410 entraînée par un moteur électrique ouvert 120, 220, 320, 400.

Ainsi donc, l'invention concerne notamment tout système de refroidissement moteur comportant au moins un dispositif de ventilation 100, 200, 300, 400 tel que précédemment décrit. On pense par exemple ici à un système de refroidissement d'un véhicule automobile, qui est essentiellement composé d'au moins un échangeur thermique couplé à au moins un tel dispositif de ventilation 100, 200, 300, 400.

De même, l'invention s'applique également à tout véhicule automobile doté d'au moins un dispositif de ventilation 100, 200, 300, 400 tel que précédemment décrit. Il est par ailleurs à noter que la notion de véhicule automobile concerne ici tout véhicule à moteur, c'est-à-dire tout engin roulant capable de progresser de lui-même à l'aide d'un moteur, quel que soit le type dudit moteur et indépendamment de la taille et/ou du poids dudit véhicule. Par conséquent, un véhicule automobile pourra désigner aussi bien une voiture, un camion ou un autobus par exemple.

## Revendications

1. Dispositif de ventilation (100,200, 300,400) comportant une hélice (110,210, 310,410) apte à être entraînée en rotation par un moteur électrique ouvert (120,220, 320,420) qui est solidaire d'un support (130,230, 330,430) destiné à la fixation dudit dispositif de ventilation (100,200, 300,400), l'hélice (110,210, 310,410) étant composée d'une pluralité de pales (111,211, 311,411) qui sont régulièrement réparties autour d'un bol (112,212, 312, 412) à l'intérieur duquel sont ménagées des nervures internes (113,213, 313,413) aptes à ventiler ledit moteur électrique ouvert (120,220, 320, 420), **caractérisé en ce que** le support (130,230, 330,430) comporte une partie centrale (131,231, 331,431) qui est liée de manière étanche à au moins une portion périphérique du moteur électrique ouvert (120, 220,320, 420).

2. Dispositif de ventilation (100,200, 300) selon la revendication 1, **caractérisé en ce que** la partie centrale (131,231, 331) du support (130,230, 330) comporte un trou traversant (132,232, 332) dont la section est sensiblement complémentaire de celle du moteur électrique ouvert (120,220, 320), ledit trou traversant (132,232, 332) étant destiné à recevoir ledit moteur électrique ouvert (120,220, 320).

3. Dispositif de ventilation (100,200, 300) selon la revendication 2, **caractérisé en ce que** le trou traversant (132,232, 332) est délimité par un bord interne (133,233, 333) qui coopère par contact jointif continu avec une portion de la surface périphérique du moteur électrique ouvert (120,220, 320).

4. Dispositif de ventilation (100,200) selon la revendication 3, **caractérisé en ce que** le bord interne (133,233) coopère par contact jointif continu avec la paroi latérale (122,222) du moteur électrique ouvert (120,220).

5. Dispositif de ventilation (300) selon la revendication 3, **caractérisé en ce que** le bord interne (333) coopère par contact jointif continu avec une portion périphérique de la partie arrière (323) du moteur électrique (320).

6. Dispositif de ventilation (400) selon la revendication 1, **caractérisé en ce que** la partie centrale (431) du support (430) comporte un trou borgne (432) apte à recevoir au moins partiellement le moteur électrique ouvert (420), le fond (438) dudit trou borgne (432) s'étendant sensiblement en regard de la partie arrière dudit moteur électrique ouvert (420).

7. Dispositif de ventilation (400) selon la revendication 6, **caractérisé en ce que** le fond (438) du trou borgne (432) est solidaire de la partie arrière du moteur électrique ouvert (420).

8. Dispositif de ventilation (400) selon l'une des revendications 6 ou 7, **caractérisé en ce que** le fond (438) du trou borgne (432) est apte à constituer la partie arrière, formant flasque, du moteur électrique ouvert (420).

9. Dispositif de ventilation (100,200, 300) selon l'une quelconque des revendications 1 à 8, **caractérisé en ce que** la partie centrale (131,231, 331) du support (130,230, 330) est apte à maintenir le moteur électrique (120,220, 320) par clipsage.

10. Dispositif de ventilation (100,200, 300) selon l'une quelconque des revendications 1 à 9, **caractérisé en ce que** la partie centrale (131,231, 331) du support (130,230, 330) est apte à maintenir le moteur électrique (120,220, 320) par montage serré.

11. Dispositif de ventilation (100) selon l'une quelconque des revendications 1 à 10, **caractérisé en ce que** la partie centrale (131) comporte une surface (134), dite active, qui est positionnée en regard du fond (114) du bol (112) et qui présente une forme concave apte à faciliter l'écoulement de l'air de l'intérieur vers l'extérieur dudit bol (112).

12. Dispositif de ventilation (100) selon la revendication 11, **caractérisé en ce que** la surface active (134) de la partie centrale (131) présente une section en forme de quart de cercle dont les deux extrémités s'étendent respectivement de manière sensiblement axiale au niveau du bord interne (133) de la partie centrale (131), et de manière sensiblement transversale au niveau du bord externe (135) de ladite partie centrale (131).

13. Dispositif de ventilation (200) selon l'une quelconque des revendications 1 à 10, **caractérisé en ce que** la partie centrale (231) comporte une surface (234), dite active, qui est positionnée en regard du fond (214) du bol (212) et qui présente une forme sensiblement plane s'étendant de manière sensiblement linéaire.

14. Dispositif de ventilation (300,400) selon l'une quelconque des revendications 1 à 10, **caractérisé en ce que** la partie centrale (331,431) comporte une surface (334, 434), dite active, qui est positionnée en regard du fond (314,414) du bol (312,412) et qui s'étend de manière discontinue.

15. Dispositif de ventilation (100,200, 300, 400) selon l'une quelconque des revendications 1 à 14, **caractérisé en ce que** la partie centrale (131,231, 331,431) présente une forme annulaire dont le bord externe (135, 235, 335, 435) s'étend sensiblement en regard de celui du bol (112,212, 312,412), et dont le bord interne (133,233, 333,433) délimite un trou (132,232, 332,432) de section circulaire.

16. Dispositif de ventilation (100,200, 300,400) selon l'une quelconque des revendications 1 à 15, **caractérisé en ce que** le support (130,230, 330,430) comporte en outre une partie périphérique (136, 236, 336,436), formant cadre, qui est reliée à la partie centrale (131, 231,331,431) par au moins un bras support (137,237, 337,437).

17. Dispositif de refroidissement moteur, **caractérisé en ce qu'**il comporte au moins un dispositif de ventilation (100,200, 300,400) selon l'une quelconque des revendications précédentes.

18. Véhicule automobile, **caractérisé en ce qu'**il comporte au moins un dispositif de ventilation (100, 200,300, 400) selon l'une quelconque des revendications 1 à 16.

## Patentansprüche

1. Lüftungsvorrichtung (100, 200, 300, 400), die ein Lüfterrad (110, 210, 310, 410) aufweist, das von einem offenen Elektromotor (120, 220, 320, 420) in Drehung versetzt werden kann, der fest mit einem Träger (130, 230, 330, 430) verbunden ist, welcher zur Befestigung der Lüftungsvorrichtung (100, 200, 300, 400) bestimmt ist, wobei das Lüfterrad (110, 210, 310, 410) aus einer Vielzahl von Schaufeln (111, 211, 311, 411) zusammengesetzt ist, die gleichmäßig um eine Schale (112, 212, 312, 412) herum verteilt sind, in deren Innerem innere Rippen (113, 213, 313, 413) angeordnet sind, die den offenen Elektromotor (120, 220, 320, 420) belüften können, **dadurch gekennzeichnet, dass** der Träger (130, 230, 330, 430) einen zentralen Bereich (131, 231, 331, 431) aufweist, der dicht mit mindestens einem Umfangsteil des offenen Elektromotors (120, 220, 320, 420) verbunden ist.

2. Lüftungsvorrichtung (100, 200, 300) nach Anspruch 1, **dadurch gekennzeichnet, dass** der zentrale Bereich (131, 231, 331) des Trägers (130, 230, 330) ein Durchgangsloch (132, 232, 332) aufweist, dessen Querschnitt im Wesentlichen komplementär zu demjenigen des offenen Elektromotors (120, 220, 320) ist, wobei das Durchgangsloch (132, 232, 332) dazu bestimmt ist, den offenen Elektromotor (120, 220, 320) aufzunehmen.

3. Lüftungsvorrichtung (100, 200, 300) nach Anspruch 2, **dadurch gekennzeichnet, dass** das Durchgangsloch (132, 232, 332) von einem Innenrand (133, 233, 333) begrenzt wird, der durch durchgehenden aneinanderliegenden Kontakt mit einem Teil der Umfangsfläche des offenen Elektromotors (120, 220, 320) zusammenwirkt.

4. Lüftungsvorrichtung (100, 200) nach Anspruch 3, **dadurch gekennzeichnet, dass** der Innenrand (133, 233) durch durchgehenden aneinanderliegenden Kontakt mit der Seitenwand (122, 222) des offenen Elektromotors (120, 220) zusammenwirkt.

5. Lüftungsvorrichtung (300) nach Anspruch 3, **dadurch gekennzeichnet, dass** der Innenrand (333) durch durchgehenden aneinanderliegenden Kontakt mit einem Umfangsteil des hinteren Bereichs (323) des Elektromotors (320) zusammenwirkt.

6. Lüftungsvorrichtung (400) nach Anspruch 1, **dadurch gekennzeichnet, dass** der zentrale Bereich (431) des Trägers (430) ein Sackloch (432) aufweist, das den offenen Elektromotor (420) zumindest teilweise aufnehmen kann, wobei der Boden (438) des Sacklochs (432) im Wesentlichen gegenüber dem hinteren Bereich des offenen Elektromotors (420) verläuft.

7. Lüftungsvorrichtung (400) nach Anspruch 6, **dadurch gekennzeichnet, dass** der Boden (438) des Sacklochs (432) fest mit dem hinteren Bereich des offenen Elektromotors (420) verbunden ist.

8. Lüftungsvorrichtung (400) nach einem der Ansprüche 6 oder 7, **dadurch gekennzeichnet, dass** der Boden (438) des Sacklochs (432) den einen Flansch formenden hinteren Bereich des offenen Elektromotors (420) bilden kann.

9. Lüftungsvorrichtung (100, 200, 300) nach einem der Ansprüche 1 bis 8, **dadurch gekennzeichnet, dass** der zentrale Bereich (131, 231, 331) des Trägers (130, 230, 330) den Elektromotor (120, 220, 320) durch Clipbefestigung halten kann.

10. Lüftungsvorrichtung (100, 200, 300) nach einem der Ansprüche 1 bis 9, **dadurch gekennzeichnet, dass** der zentrale Bereich (131, 231, 331) des Trägers (130, 230, 330) den Elektromotor (120, 220, 320) durch Presseinpassung halten kann.

11. Lüftungsvorrichtung (100) nach einem der Ansprüche 1 bis 10, **dadurch gekennzeichnet, dass** der zentrale Bereich (131) eine so genannte aktive Fläche (134) aufweist, die gegenüber dem Boden (114) der Schale (112) positioniert ist und eine konkave Form hat, die das Strömen der Luft vom Inneren der Schale (112) nach außen erleichtern kann.

12. Lüftungsvorrichtung (100) nach Anspruch 11, **dadurch gekennzeichnet, dass** die aktive Fläche (134) des zentralen Bereichs (131) einen viertelkreisförmigen Querschnitt hat, dessen zwei Enden sich im Wesentlichen axial im Bereich des Innenrands (133) des zentralen Bereichs (131) bzw. im Wesentlichen quer im Bereich des Außenrands (135) des zentralen Bereichs (131) erstrecken.

13. Lüftungsvorrichtung (200) nach einem der Ansprüche 1 bis 10, **dadurch gekennzeichnet, dass** der zentrale Bereich (231) eine so genannte aktive Fläche (234) aufweist, die gegenüber dem Boden (214) der Schale (212) positioniert ist und eine im Wesentlichen ebene Form hat, die im Wesentlichen linear verläuft.

14. Lüftungsvorrichtung (300, 400) nach einem der Ansprüche 1 bis 10, **dadurch gekennzeichnet, dass** der zentrale Bereich (331, 431) eine so genannte aktive Fläche (334, 434) aufweist, die gegenüber dem Boden (314, 414) der Schale (312, 412) positioniert ist und diskontinuierlich verläuft.

15. Lüftungsvorrichtung (100, 200, 300, 400) nach einem der Ansprüche 1 bis 14, **dadurch gekennzeichnet, dass** der zentrale Bereich (131, 231, 331, 431) eine Ringform aufweist, deren Außenrand (135, 235, 335, 435) im Wesentlichen gegenüber demjenigen der Schale (112, 212, 312, 412) verläuft, und deren Innenrand (133, 233, 333, 433) ein Loch (132, 232, 332, 432) mit kreisförmigem Querschnitt begrenzt.

16. Lüftungsvorrichtung (100, 200, 300, 400) nach einem der Ansprüche 1 bis 15, **dadurch gekennzeichnet, dass** der Träger (130, 230, 330, 430) außerdem einen einen Rahmen bildenden Umfangsbereich (136, 236, 336, 436) aufweist, der mit dem zentralen Bereich (131, 231, 331, 431) über mindestens einen Trägerarm (137, 237, 337, 437) verbunden ist.

17. Motorkühlvorrichtung, **dadurch gekennzeichnet, dass** sie mindestens eine Lüftungsvorrichtung (100, 200, 300, 400) nach einem der vorhergehenden Ansprüche aufweist.

18. Kraftfahrzeug, **dadurch gekennzeichnet, dass** es mindestens eine Lüftungsvorrichtung (100, 200, 300, 400) nach einem der Ansprüche 1 bis 16 aufweist.

## Claims

1. Ventilation device (100, 200, 300, 400) comprising a propeller (110, 210, 310, 410) suitable for being driven in rotation by an open electric motor (120, 220, 320, 420) which is securely attached to a support (130, 230, 330, 430) intended for the fastening of said ventilation device (100, 200, 300, 400), the propeller (110, 210, 310, 410) consisting of a plurality of vanes (111, 211, 311, 411) which are evenly distributed around a bowl (112, 212, 312, 412) inside which are formed internal ribs (113, 213, 313, 413) suitable for ventilating said open electric motor (120, 220, 320, 420), **characterized in that** the support (130, 230, 330, 430) comprises a central part (131, 231, 331, 431) which is linked in a seal-tight manner to at least one peripheral part of the open electric motor (120, 220, 320, 420).

2. Ventilation device (100, 200, 300) according to Claim 1, **characterized in that** the central part (131, 231, 331) of the support (130, 230, 330) comprises a through hole (132, 232, 332), the section of which substantially complements that of the open electric motor (120, 220, 320), said through hole (132, 232, 332) being intended to receive said open electric motor (120, 220, 320).

3. Ventilation device (100, 200, 300) according to Claim 2, **characterized in that** the through hole (132, 232, 332) is delimited by an inner edge (133, 233, 333) which cooperates by continuous butt-jointed contact with a part of the peripheral surface of the open electric motor (120, 220, 320).

4. Ventilation device (100, 200) according to Claim 3, **characterized in that** the inner edge (133, 233) cooperates by continuous butt-jointed contact with the lateral wall (122, 222) of the open electric motor (120, 220).

5. Ventilation device (300) according to Claim 3, **characterized in that** the inner edge (333) cooperates by continuous butt-jointed contact with a peripheral portion of the rear part (323) of the electric motor (320).

6. Ventilation device (400) according to Claim 1, **characterized in that** the central part (431) of the support (430) comprises a blind hole (432) suitable for receiving, at least partially, the open electric motor (420), the bottom (438) of said blind hole (432) extending substantially facing the rear part of said open electric motor (420).

7. Ventilation device (400) according to Claim 6, **characterized in that** the bottom (438) of the blind hole (432) is securely attached to the rear part of the open electric motor (420).

8. Ventilation device (400) according to one of Claims 6 or 7, **characterized in that** the bottom (438) of the blind hole (432) is suitable for forming the rear, flange-forming, part of the open electric motor (420).

9. Ventilation device (100, 200, 300) according to any one of Claims 1 to 8, **characterized in that** the central part (131, 231, 331) of the support (130, 230, 330) is suitable for holding the electric motor (120, 220, 320) by snap-fitting.

10. Ventilation device (100, 200, 300) according to any one of Claims 1 to 9, **characterized in that** the central part (131, 231, 331) of the support (130, 230, 330) is suitable for holding the electric motor (120, 220, 320) by tightfitting.

11. Ventilation device (100) according to any one of Claims 1 to 10, **characterized in that** the central part (131) comprises a surface (134), called active, which is positioned facing the bottom (114) of the bowl (112) and which has a concave shape suitable for facilitating the flow of the air from the inside to the outside of said bowl (112).

12. Ventilation device (100) according to Claim 11, **characterized in that** the active surface (134) of the central part (131) has a quarter-circle-shaped section, the two ends of which extend respectively in a substantially axial manner at the inner edge (133) of the central part (131), and in a substantially transversal manner at the outer edge (135) of said central part (131).

13. Ventilation device (200) according to any one of Claims 1 to 10, **characterized in that** the central part (231) comprises a surface (234), called active, which is positioned facing the bottom (214) of the bowl (212) and which has a substantially planar shape extending substantially linearly.

14. Ventilation device (300, 400) according to any one of Claims 1 to 10, **characterized in that** the central part (331, 431) comprises a surface (334, 434), called active, which is positioned facing the bottom (314, 414) of the bowl (312, 412) and which extends discontinuously.

15. Ventilation device (100, 200, 300, 400) according to any one of Claims 1 to 14, **characterized in that** the central part (131, 231, 331, 431) has an annular shape, the outer edge (135, 235, 335, 435) of which extends substantially facing that of the bowl (112, 212, 312, 412), and the inner edge (133, 233, 333, 433) of which delimits a hole (132, 232, 332, 432) of circular section.

16. Ventilation device (100, 200, 300, 400) according to any one of Claims 1 to 15, **characterized in that** the support (130, 230, 330, 430) also comprises a peripheral, frame-forming, part (136, 236, 336, 436), which is linked to the central part (131, 231, 331, 431) by at least one support arm (137, 237, 337, 437).

17. Engine cooling device, **characterized in that** it comprises at least one ventilation device (100, 200, 300, 400) according to any one of the preceding claims.

18. Motor vehicle, **characterized in that** it comprises at least one ventilation device (100, 200, 300, 400) according to any one of Claims 1 to 16.
